# FASCICULE DE BREVET EUROPEEN

(11) **EP 2 935 378 B1**
(45) Date de publication et mention de la délivrance du brevet: **23.05.2018**
(21) Numéro de dépôt: 13803178.6
(22) Date de dépôt: 26.11.2013
(51) Int. Cl.: C08F 265/10

(54) **NOUVEAU PROCÉDÉ DE PRÉPARATION DE POLYMÈRES THERMO-ÉPAISSISSANTS**
NEUARTIGES VERFAHREN ZUR HERSTELLUNG VON HITZEVERDICKENDEN POLYMEREN
NOVEL METHOD FOR PREPARING HEAT-THICKENING POLYMERS

(30) Priorité: 21.12.2012 FR 1262528
(43) Date de publication de la demande: 28.10.2015
(73) Titulaire: Societe D'Exploitation De Produits Pour Les Industries Chimiques Seppic, 75007 Paris (FR)
(72) Inventeur: MALLO, Paul, 78110 Le Vésinet (FR); BRAUN, Olivier, 42170 St Just Rambert (FR)
(74) Mandataire: Laigneau, Amandine
(86) Numéro de dépôt international: PCT/FR2013/052855
(87) Numéro de publication internationale: WO 2014/096594

(56) Documents cités:
- WO-A1-00/40958
- WO-A2-2007/000535
- XU WU, YINGJIE QIAO, HUI YANG, JINBEN WANG: "Self-assembly of a series of random copolymers bearing amphiphilic side chains", JOURNAL OF COLLOID AND INTERFACE SCIENCE, vol. 349, no. 2, 2 juin 2010 (2010-06-02), pages 560-564, XP002712285, ISSN: 0021-9797
- OYEWOLE TAYE SALAMI, JOHANN PLANK: "Synthesis, Effectiveness, and Working Mechanism of Humic Acid-{sodium 2-acrylamido-2-methylpropane sulfonate-co-N,N-dimethyl acrylamide-co-acrylic acid} Graft Copolymer as High-Temperature Fluid Loss Additive in Oil Well Cementing", JOURNAL OF APPLIED POLYMER SCIENCE, vol. 126, no. 4, 1 mai 2012 (2012-05-01), pages 1449-1460, XP002712284, ISSN: 0021-8995

## Description

La présente demande de brevet a pour objet un nouveau procédé de préparation copolymères greffés hydrosolubles.

Les polymères thermo-épaississants sont des polymères dont la viscosité varie considérablement en fonction de la température. Ils sont notamment caractérisés par une température dite critique, au-delà de laquelle la viscosité de leur solution aqueuse augmente très nettement, le plus souvent d'un facteur de plusieurs dizaines.

Oewole Taye Salami et al. divulgue la préparation d'un copolymère peigne dans lequel des monomères AMPS et acide acrylique sont greffés sur un squelette d'acide humique par polymérisation radicalaire (Oyewole Taye Salami et al. Journal of Applied Polymer Science, Vol 126, 1449-1460 (2012).

La demande internationale WO 00/40958 décrit un procédé de préparation de copolymères d'acrylamide et de poly(N-isopropyl acrylamide) incluant les étapes successives suivantes :
(a) la synthèse d'un télomère de N-isopropyl acrylamide (NIPAM) par polymérisation radicalaire ;
(b) l'isolation du télomère obtenu, (PNIPAM)ₓ-NH₂ par précipitation dans l'éther, filtration puis séchage ;
(c) la réaction dans le chlorure de méthylène, de (PNIPAM)ₓ-NH₂ avec un large excès d'acide acrylique en présence de cyclohexyl carbodiimide pour conduire au macro-monomère poly-(NIPAM) porteur d'une fonction acryloyle en bout de chaîne (PNIPAM)ₓ ;
(d) l'isolation du macro-monomère obtenu par précipitation dans l'éther, filtration puis séchage ;
(e) la copolymérisation du macro monomère obtenu avec de l'acrylamide (AM) ou du diméthylacrylamide (DMA) dans l'eau, pour obtenir les copolymères greffés à segment (PNIPAM)ₓ, AM-g-(PNIPAM)ₓ ou DMA-g-(PNIPAM)ₓ ;
(f) La purification par précipitation dans l'eau pour DMA/(PNIPAM)ₓ ou dans l'acétone pour AM/(PNIPAM)ₓ, puis ultrafiltration.

La demande internationale publiée sous le numéro WO 2007/000535 divulgue un procédé de préparation de polymères greffés, en limitant autant que faire se peut, l'utilisation de solvants organiques et plus particulièrement un procédé de préparation d'un copolymère en peigne dont le squelette est du type acrylamide, acide acrylique, acryloylamino éthanol ou diméthylacrylamide, sur lequel sont greffés des segments latéraux poly(N-alkyl acrylamide) ou poly(N,N-dialkyl acrylamide), comprenant les étapes successives suivantes :
(a) La préparation d'un télomère poly(N-alkyl acrylamide) ou poly(N,N-dialkyl acrylamide), de formule (I) :

   H₂N-R₁-Z-{CH₂-C(R₂)[C(=O)N(R₃)(R₄)]-}ₙ-H (I)

   dans laquelle n représente un nombre entier supérieur ou égal à 2 et inférieur ou égal à 100, Z représente une fonction susceptible de jouer le rôle d'agent de transfert de radicaux, R₁ représente un radical divalent comportant de 1 à 4 atomes de carbone, R₂ un atome d'hydrogène ou un radical méthyle, R₃ un atome d'hydrogène ou un radical alkyle linéaire ou ramifié comportant de 1 à 4 atomes de carbone et R₄, identique ou différent de R₃, représente un radical alkyle linéaire ou ramifié comportant de 1 à 4 atomes de carbone, par réaction dans l'eau d'un composé de formule (II) :

   CH₂=C(R₂)-C(=O)N(R₃)(R₄) (II) :

   dans laquelle R₂, R₃ et R₄ sont tels que définis ci-dessus, avec un composé limiteur de chaîne de formule (III) :

   Z-R₁-NH₂ (III)

   dans laquelle Z représente une fonction susceptible de jouer le rôle d'agent de transfert de radicaux dans un rapport molaire (II) / (III) inférieur ou égal à n et supérieur ou égal à n/10, en présence d'un initiateur de polymérisation ;
(b) l'isolation du télomère de formule (I) obtenu à l'étape (a) ;
(c) la réaction dans l'eau du télomère de formule (I) obtenu à l'étape (b), avec le chlorure d'acide de formule (IV) :

   CH₂=C(R₅)-C(=O)-Cl (IV)

   Dans laquelle R₅ représente un atome d'hydrogène ou un radical méthyle et dans un rapport molaire (IV) / (III) inférieur ou égal à 10 et supérieur ou égal à 1 tout en maintenant le pH du milieu réactionnel à une valeur comprise entre 6 et 13, et de préférence entre 7 et 8, pour obtenir un macromonomère de formule (V):

   CH₂=C(R₅)-C(=O)NH-R₁-Z-{CH₂-C(R₂)[C(=O)N(R₃)(R₄)]-}ₙ-H (V)
(d) l'isolation du macro-monomère de formule (V) obtenu à l'étape (c) ;
(e) la copolymérisation dans l'eau, du macromonomère de formule (V) isolé à l'étape (d), avec un monomère choisi parmi l'acrylamide, l'acide acrylique, l'acryloylaminoéthanol ou le diméthylacrylamide et si désiré,
(f) La purification du copolymère peigne obtenu.

Or, si le procédé ainsi divulgué fonctionne parfaitement lorsque le squelette principal est constitué d'un enchaînement de monomères neutres, il n'en n'est pas de même lorsque l'on souhaite remplacer ces monomères neutres par des monomères ioniques comme l'acide acrylique ou encore l'acide 2-acrylamido 2-méthyl propanesulfonique (ATBS). Il se produit en effet un phénomène dit de "salting out", qui provoque la polymérisation du macromonomère, destiné à former les chaînes pendantes, comme le macromonomère de poly(N-isopropyl acrylamide).

La demande de brevet français déposée le 15 juin 2012 et enregistrée sous le numéro 12 55617, divulgue un procédé de préparation d'un copolymère en peigne, dont le squelette est du type acide 2-acrylamido 2-méthyl propanesulfonique (ATBS), sur lequel sont greffés des segments latéraux poly(N-alkyl acrylamide) ou poly(N,N-dialkyl acrylamide), comprenant les étapes successives suivantes :
- Une étape (a) de réaction d'un composé de formule (II) :

   CH₂=C(R₂)-C(=O)-N(R₃)(R₄) (II),

   dans laquelle R₂ représente un atome d'hydrogène ou un groupement méthyle, R₃ un atome d'hydrogène ou un radical alkyle linéaire ou ramifié comportant de 1 à 4 atomes de carbone et R₄, identique ou différent de R₃, représente un radical alkyle linéaire ou ramifié comportant de 1 à 4 atomes de carbone, avec un composé limiteur de chaîne de formule (III) :

   Z-R₁-NH₂ (III),

   dans laquelle R₁ représente un radical divalent comportant de 1 à 4 atomes de carbone, et Z représente une fonction susceptible de jouer le rôle d'agent de transfert de radicaux, en présence d'un initiateur de polymérisation, dans un mélange tertio-butanol / eau, pour obtenir un télomère poly(N-alkyl acrylamide) ou poly(N,N-dialkyl acrylamide), de formule (I) :

   H₂N-R₁-Z-{CH₂-C(R₂)[C(=O)N(R₃)(R₄)]-}ₙ-H (I)

   dans laquelle n représente un nombre entier supérieur ou égal à 2 et inférieur ou égal à 100, Z représente une fonction susceptible de jouer le rôle d'agent de transfert de radicaux, optionnellement
- Une étape (b) d'isolation et/ou de séchage dudit télomère de formule (I) obtenu à l'étape (a) ;
- Une étape (c) de réaction dans le tertio-butanol du télomère de formule (I) obtenu à l'étape (a), ou optionnellement à l'étape (b), avec un chlorure d'acide de formule (IV) :

   CH₂=C(R₅)-C(=O)-Cl (IV)

   dans laquelle R₅ représente un atome d'hydrogène ou un radical méthyle et dans un rapport molaire (IV) / (III) inférieur ou égal à 10 et supérieur ou égal à 1 tout en maintenant le pH du milieu réactionnel à une valeur comprise entre 8 et 10, pour obtenir une solution du macromonomère de formule (V):

   CH₂=C(R₅)-C(=O)NH-R₁-Z-{CH₂-C(R₂)[C(=O)N(R₃)(R₄)]-}ₙ-H (V) ;

   optionnellement
- Une étape (d) d'isolation et/ou de séchage dudit télomère de formule (I) obtenu à l'étape (c) ;
- Une étape (e) de copolymérisation dans le tertio-butanol, du macromonomère de formule (V) issu de l'étape (c) ou de l'étape (d), avec le sel d'ammonium de l'acide 2-acrylamido 2-méthyl propanesulfonique et si désiré d'autres monomères.

Ce procédé présente cependant l'inconvénient de mettre en oeuvre un chlorure d'acide, le chlorure d'acryloyle, dont l'utilisation industrielle est délicate et requiert la mise en oeuvre et le suivi de procédures très contraignantes pour assurer une sécurité optimale.

C'est pourquoi les inventeurs ont cherché à développer un procédé qui ne présente pas ce désavantage

L'invention a donc pour objet un procédé de préparation d'un copolymère en peigne, dont le squelette est constitué pour 100% molaire :
- De 50% à 100% molaire et plus particulièrement de 75% molaire à 100% molaire d'unités monomériques issue de l'acide 2-acrylamido 2-méthyl propanesulfonique (ATBS) libre, partiellement ou totalement salifié sous forme de sel d'ammonium,
- Optionnellement jusqu'à 50% molaire sous forme de sel d'ammonium, et plus particulièrement jusqu'à 25% molaire d'unités monomériques issues d'au moins un monomère choisi parmi l'acrylamide, l'acrylate de 2-hydroxy éthyle, le N,N-diméthyl acrylamide ou l'acide acrylique partiellement ou totalement salifié sous forme de sel d'ammonium, et
- Optionnellement de 0,005% molaire à 1%, plus particulièrement de 0,01% molaire à 0,5% molaire d'unité monomériques issues d'au moins un monomère de réticulation comprenant au moins deux double liaisons carbone -carbone,
squelette, sur lequel sont greffés des segments latéraux poly(N-alkyl acrylamide) ou poly(N,N-dialkyl acrylamide), ledit procédé comprenant les étapes successives suivantes :
- Une étape (a) de réaction d'un composé de formule (II) :

   CH₂=C(R₂)-C(=O)-N(R₃)(R₄) (II),

   dans laquelle R₂ représente un atome d'hydrogène ou un groupement méthyle, R₃ un atome d'hydrogène ou un radical alkyle linéaire ou ramifié comportant de 1 à 4 atomes de carbone et R₄, identique ou différent de R₃, représente un radical alkyle linéaire ou ramifié comportant de 1 à 4 atomes de carbone, avec un composé limiteur de chaîne de formule (IIIa) :

   HS-R₁-NH₂ (IIIa)

   ou de formule (IIIb) :

   HS-R₁-C(=O)-OH (IIIb)

   formule (IIIa) ou (IIIb) dans lesquelles R₁ représente un radical divalent comportant de 1 à 4 atomes de carbone, en présence d'un initiateur de polymérisation, dans un mélange tertio-butanol / eau, pour obtenir un télomère poly(N-alkyl acrylamide) ou poly(N,N-dialkyl acrylamide), de formule (Ia) :

   H₂N-R₁-S-{CH₂-C(R₂)[C(=O)N(R₃)(R₄)]-}ₙ-H (Ia)

   ou de formule (Ib) :

   HO-C(=O)-R₁-S-{CH₂-C(R₂)[C(=O)N(R₃)(R₄)]-}ₙ-H (Ib)

   formule (IIIa) ou (IIIb) dans lesquelles n représente un nombre entier supérieur ou égal à 2 et inférieur ou égal à 100 ; optionnellement
- Une étape (b) d'isolation et/ou de séchage dudit télomère de formule (Ia) ou de formule (Ib), obtenu à l'étape (a) ;
- Une étape (c) de préparation d'une solution du macromonomère de formule (Va):

   CH₂=C(R₅)-C(=O)-NH-R₁-Z-{CH₂-C(R₂)[C(=O)N(R₃)(R₄)]-}ₙ-H (Va)

   ou de formule (Vb) :

   CH₂=C(R₅)-C(=O)-O-(C=O)-R₁-Z-{CH₂-C(R₂)[C(=O)N(R₃)(R₄)]-}ₙ-H (Vb) ;

   optionnellement
- Une étape (d) d'isolation et/ou de séchage dudit macromonomère de formule (Va) ou de formule (Vb) obtenu à l'étape (c) ;
- Une étape (e) de copolymérisation dans le tertio-butanol, du macromonomère de formule (Va) ou de formule Vb), issu de l'étape (c) ou de l'étape (d), avec le sel d'ammonium de l'acide 2-acrylamido 2-méthyl propanesulfonique, et le cas échéant avec le ou les monomères optionnels et/ou le ou les monomère de réticulation comprenant au moins deux double liaisons carbone -carbone dans les proportions molaires souhaitées, et si désiré,
- Une étape (f) de purification du copolymère en peigne obtenu à l'étape (e),
**ledit procédé étant caractérisé en ce que** l'étape c) consiste à faire réagir dans le tertio-butanol le télomère de formule (Ia) ou de formule (Ib) obtenu à l'étape (a), ou optionnellement à l'étape (b), avec le méthacrylate de glycidyle (IV) et dans un rapport molaire (IV)/(IIIa) ou (IV)/(IIIb) inférieur ou égal à 10 et supérieur ou égal à 1 tout en maintenant le pH du milieu réactionnel à une valeur supérieure à 10 et inférieure ou égale à 13 plus particulièrement supérieure ou égale à 11 et inférieure ou égale à 12, pour obtenir, après ajustement du pH à une valeur supérieure ou égale à 7 et inférieure ou égale à 9, de préférence inférieure ou égale à 8.

Le méthacrylate de glycidyle, ou méthacrylate d'[(oxyranyl) méthyle] mis en oeuvre à l'étape c) du procédé tel que défini ci-dessus, est identifié dans Chemical Abstracts sous le numéro RN = 106-91-2.

Parmi les monomères de réticulation comprenant au moins deux doubles liaisons carbone -carbone que l'on peut mettre en oeuvre à l'étape e) du procédé tel que défini ci-dessus, il y a par exemple le diméthacrylate d'éthylèneglycol, le tétraallyloxyéthane, le diacrylate d'éthylèneglycol, le diallyl urée, le triallyl amine, le triméthylol propanetriacrylate ou le méthylène-bis(acrylamide) ou un mélange de ces composés.

Selon un aspect particulier du procédé tel que défini ci-dessus, dans l'étape e) telle que décrite précédemment, l'agent de réticulation est plus particulièrement mis en oeuvre dans une proportion molaire, supérieure ou égale à 0,01% et inférieure ou égale à 0,25%.

L'invention a aussi plus particulièrement pour objet le procédé tel que défini ci-dessus, dans lequel les segments latéraux poly(N-alkyl (méth)acrylamide) ou poly(N,N-dialkyl (méth)acrylamide) sont choisis parmi les segments latéraux suivants :
- Segments latéraux poly(N-méthyl méthacrylamide),
- Segments latéraux poly(N-éthyl méthacrylamide),
- Segments latéraux poly(N-propyl méthacrylamide),
- Segments latéraux poly(N-isopropyl méthacrylamide),
- Segments latéraux poly[N-(2-hydroxy éthyl) méthacrylamide],
- Segments latéraux poly(N,N-diméthyl méthacrylamide),
- Segments latéraux poly(N,N-diéthyl méthacrylamide),
- Segments latéraux poly(N-méthyl acrylamide),
- Segments latéraux poly(N-éthyl acrylamide),
- Segments latéraux poly(N-propyl acrylamide),
- Segments latéraux poly(N-isopropyl acrylamide),
- Segments latéraux poly[N-(2-hydroxy éthyl) acrylamide],
- Segments latéraux poly(N,N-diméthyl acrylamide),
- Segments latéraux poly(N,N-diéthyl acrylamide)
et plus particulièrement un copolymère en peigne tel que défini ci-dessus, dans lequel lesdits segments latéraux sont choisis parmi les segments latéraux suivants :
- Segments latéraux poly(N-isopropyl acrylamide),
- Segments latéraux poly[N-(2-hydroxy éthyl) acrylamide],
- Segments latéraux poly(N,N-diméthyl acrylamide) et
- Segments latéraux poly(N,N-diéthyl acrylamide).

L'exemple suivant illustre l'invention sans toutefois la limiter. Il met en évidence que l'on peut préparer des polymères peignes sans squelette acrylamide à segment latéraux de type N-alkyl acrylamide, qui soient thermo-épaississants.

### Préparation d'un copolymère en peigne à squelette du type ATBS, sur lequel sont greffés des segments latéraux poly(N-isopropyl acrylamide) ATBS-g-NIPAM.

### (1) Préparation d'un télomère poly(N-isopropyl acrylamide)

On dissout à 25°C dans un réacteur thermostaté, 60g de N-isopropyl acrylamide (NIPAM) dans 75g d'un mélange tertio-butanol-eau (50/50 en volume), que l'on agite sous barbotage d'azote pendant environ 1 heure. On ajoute ensuite 0,9g de du chlorhydrate de 2-amino éthanethiol (AET.HCI). La polymérisation est initiée en ajoutant 1,33g de peroxyde de dilauroyle en portant la température à 60°C, puis on laisse le milieu réactionnel sous agitation et barbotage d'azote pendant encore 3 heures et demi. 87g de tertio-butanol sont ensuite ajouter pour conduire à un mélange réactionnel final blanc et pâteux.

### (2) Préparation du macromonomère

On ajoute au milieu réactionnel obtenu à l'étape (1) maintenu à une température de 10°C, 0,5g d'une solution de soude à 48% en poids, dans le tertio-butanol, pour amener le pH autour de 12 pendant. 3,16g de méthacrylate de glycidyle sont alors ajoutés et la réaction est laissée se dérouler pendant une heure. En fin de réaction, on ajoute environ 1,3 g d'acide chlorhydrique à 15% dans l'eau pour abaisser le pH à une valeur comprise entre 7 et 8. La solution obtenue comprend 28,1% en poids de macromonomère NIPAM et 17% en poids d'eau.

### (3) Synthèse du copolymère

On dilue 40,5 g de la solution obtenue à l'étape 2 dans 487,5g de tertio-butanol dans le réacteur thermostaté à 25°C; On y ajoute 75,2g de poudre d'acide 2-acrylamido 2-méthyl propanesulfonique puis 5,5 g d'ammoniac sont injectés dans le mélange réactionnel de façon à obtenir un pH environ égal à 6. On ajoute alors 0,5 g d'eau et 0,48 g de triacrylate de triméthylol propane (TMPTA). Après barbotage d'azote pendant 1 h et chauffage à 60°C, la polymérisation est amorcée avec 1g de peroxyde de dilauroyle. Après 3h de réaction, le produit est vidangé, filtré et séché. Le copolymère recherché est obtenu sous forme d'une poudre blanche.
Viscosité d'une solution à 1% du copolymère peigne dans l'eau 25°C :
µ = 10.000 mPa.s (Brookfield RVT Mobile 4; Vitesse : 5 tours / minute)
Viscosité d'une solution à 1% du copolymère peigne dans l'eau 50°C :
µ = 50 000 mPa.s (Brookfield RVT Mobile 5; Vitesse : 5 tours / minute)
Cette différence de viscosité constatée entre 25°C et 50°C, est caractéristique d'un polymère thermo-épaississant.

## Revendications

1. Procédé de préparation d'un copolymère en peigne, dont le squelette est constitué pour 100% molaire :
- De 50% à 100% molaire et plus particulièrement de 75% molaire à 100% molaire d'unités monomériques issue de l'acide 2-acrylamido 2-méthyl propanesulfonique (ATBS) libre, partiellement ou totalement salifié,
- Optionnellement jusqu'à 50% molaire sous forme de sel d'ammonium, et plus particulièrement jusqu'à 25% molaire d'unités monomériques issues d'au moins un monomère choisi parmi l'acrylamide, l'acrylate de 2-hydroxy éthyle, le N,N-diméthyl acrylamide ou l'acide acrylique partiellement ou totalement salifié sous forme de sel d'ammonium, et
- Optionnellement de 0,005% molaire à 1%, plus particulièrement de 0,01% molaire à 0,5% molaire d'unité monomériques issues d'au moins un monomère de réticulation comprenant au moins deux double liaisons carbone - carbone,
squelette, sur lequel sont greffés des segments latéraux poly(N-alkyl acrylamide) ou poly(N,N-dialkyl acrylamide), ledit procédé comprenant les étapes successives suivantes :
- Une étape (a) de réaction d'un composé de formule (II) :
CH₂=C(R₂)-C(=O)-N(R₃)(R₄) (II),
dans laquelle R₂ représente un atome d'hydrogène ou un groupement méthyle, R₃ un atome d'hydrogène ou un radical alkyle linéaire ou ramifié comportant de 1 à 4 atomes de carbone et R₄, identique ou différent de R₃, représente un radical alkyle linéaire ou ramifié comportant de 1 à 4 atomes de carbone, avec un composé limiteur de chaîne de formule (IIIa) :
HS-R₁-NH₂ (IIIa)
ou de formule (IIIb) :
HS-R₁-C(=O)-OH (IIIb)
formule (IIIa) ou (IIIb) dans lesquelles R₁ représente un radical divalent comportant de 1 à 4 atomes de carbone, en présence d'un initiateur de polymérisation, dans un mélange tertio-butanol / eau, pour obtenir un télomère poly(N-alkyl acrylamide) ou poly(N,N-dialkyl acrylamide), de formule (Ia) :
H₂N-R₁-S-{CH₂-C(R₂)[C(=O)N(R₃)(R₄)]-}ₙ-H (Ia)
ou de formule (Ib) :
HO-C(=O)-R₁-S-{CH₂-C(R₂)[C(=O)N(R₃)(R₄)]-}ₙ-H (Ib)
formule (IIIa) ou (IIIb) dans lesquelles n représente un nombre entier supérieur ou égal à 2 et inférieur ou égal à 100 ; et optionnellement
- Une étape (b) d'isolation et/ou de séchage dudit télomère de formule (Ia) ou de formule (Ib), obtenu à l'étape (a) ;
- Une étape (c) de préparation d'une solution du macromonomère de formule (Va)
CH₂=C(R₅)-C(=O)-NH-R₁-Z-{CH₂-C(R₂)[C(=O)N(R₃)(R₄)]-}ₙ-H (Va) ;
ou de formule (Vb);
CH₂=C(R₅)-C(=O)-O-(C=O)-R₁-Z-{CH₂-C(R₂)[C(=O)N(R₃)(R₄)]-}ₙ-H (Vb) ;
optionnellement,
- Une étape (d) d'isolation et/ou de séchage dudit macromonomère de formule (Va) ou de formule (Vb) obtenu à l'étape (c) ;
- Une étape (e) de copolymérisation dans le tertio-butanol, du macromonomère de formule (Va) ou de formule (Vb) issu de l'étape (c) ou de l'étape (d), avec le sel d'ammonium de l'acide 2-acrylamido 2-méthyl propanesulfonique, et le cas échéant avec le ou les monomères optionnels et/ou le ou les monomères de réticulation comprenant au moins deux double liaisons carbone-carbone dans les proportions molaires souhaitées, et si désiré,
- Une étape (f) de purification du copolymère peigne obtenu à l'étape (e).
**ledit procédé étant caractérisé en ce que** l'étape c) consiste à faire réagir dans le tertio-butanol le télomère de formule (Ia) ou de formule (Ib) obtenu à l'étape (a), ou optionnellement à l'étape (b), avec le méthacrylate de glycidyle (IV) et dans un rapport molaire (IV)/(IIIa) ou (IV)/(IIIb) inférieur ou égal à 10 et supérieur ou égal à 1 tout en maintenant le pH du milieu réactionnel à une valeur supérieure à 10 et inférieure ou égale à 13 plus particulièrement supérieure ou égale à 11 et inférieure ou égale à 12, pour obtenir, après ajustement du pH à une valeur supérieure ou égale à 7 et inférieure ou égale à 9, de préférence inférieure ou égale à 8.

2. Procédé tel que défini à la revendication 1, dans lequel les segments latéraux poly(N-alkyl (méth)acrylamide) ou poly(N,N-dialkyl (méth)acrylamide) sont choisis parmi les segments latéraux suivants :
- Segments latéraux poly(N-méthyl méthacrylamide),
- Segments latéraux poly(N-éthyl méthacrylamide),
- Segments latéraux poly(N-propyl méthacrylamide),
- Segments latéraux poly(N-isopropyl méthacrylamide),
- Segments latéraux poly[N-(2-hydroxy éthyl) méthacrylamide],
- Segments latéraux poly(N,N-diméthyl méthacrylamide),
- Segments latéraux poly(N,N-diéthyl méthacrylamide),
- Segments latéraux poly(N-méthyl acrylamide),
- Segments latéraux poly(N-éthyl acrylamide),
- Segments latéraux poly(N-propyl acrylamide),
- Segments latéraux poly(N-isopropyl acrylamide),
- Segments latéraux poly[N-(2-hydroxy éthyl) acrylamide],
- Segments latéraux poly(N,N-diméthyl acrylamide),
- Segments latéraux poly(N,N-diéthyl acrylamide).

3. Procédé tel que défini à la revendication 2, dans lequel les segments latéraux sont choisis parmi les segments latéraux suivants :
- Segments latéraux poly(N-isopropyl acrylamide),
- Segments latéraux poly[N-(2-hydroxy éthyl) acrylamide],
- Segments latéraux poly(N,N-diméthyl acrylamide) et
- Segments latéraux poly(N,N-diéthyl acrylamide).

## Patentansprüche

1. Verfahren zur Herstellung eines Kammcopolymers, dessen Gerüst zu 100 Mol-% gebildet wird:
- Von 50 Mol-% bis 100 Mol-% und insbesondere von 75 Mol-% bis 100 Mol-% Monomereinheiten aus freier, teilweise oder vollständig in ein Salz überführte 2-Acrylamido-2-Methylpropansulfonsäure (ATBS),
- Optional bis 50 Mol-% als Ammoniumsalz, und insbesondere bis 25 Mol-% Monomereinheiten aus mindestens einem Monomer ausgewählt aus Acrylamid, 2-Hydroxyethylacrylat, N,N-Dimethylacrylamid oder Acrylsäure, teilweise oder vollständig in ein Salz überführt als Ammoniumsalz, und
- Optional von 0,005 Mol-% bis 1 Mol-%, insbesondere von 0,01 Mol-% bis 0,5 Mol-% Monomereinheiten aus mindestens einem vernetzenden Monomer, das mindestens zwei Kohlenstoff-Kohlenstoff-Doppelbindungen umfasst,
Gerüst, auf das Poly(N-Alkylacrylamid)- oder Poly(N,N-Dialkylacrylamid)-Seitensegmente aufgepfropft sind, wobei das Verfahren die folgenden aufeinanderfolgenden Schritte umfasst:
- Einen Schritt (a) der Reaktion einer Verbindung der Formel (II):
CH₂=C(R₂)-C(=0)-N(R₃)(R₄) (II),
wobei R₂ ein Wasserstoffatom oder eine Methylgruppe darstellt, R₃ ein Wasserstoffatom oder ein linearer oder verzweigter Alkylrest, der 1 bis 4 Kohlenstoffatome umfasst, und R₄, gleich oder verschieden von R₃, einen linearen oder verzweigten Alkylrest, der 1 bis 4 Kohlenstoffatome umfasst darstellt, mit einer kettenbegrenzenden Verbindung der Formel (IIIa):
HS-R₁-NH₂ (IIIa)
oder der Formel (IIIb):
HS-R₁-C(=0)-OH (IIIb)
Formel (IIIa) oder (IIIb), wobei R₁ einen zweiwertigen Rest, der 1 bis 4 Kohlenstoffatome umfasst, darstellt, in der Gegenwart eines Polymerisationsstarters, in einem tert.-Butanol / Wasser-Gemisch, um ein Poly(N-Alkylacrylamid)- oder Poly(N,N-Dialkylacrylamid)-Telomer zu erhalten, der Formel (Ia):
H₂N-R₁-S-{CH₂-C(R₂)[C(=O)N(R₃)(R₄)]-}ₙ-H (Ia)
oder der Formel (Ib):
HO-C(=0)-R₁-S-{CH₂-C(R₂)[C(=0)N(R₃)(R₄)]-}ₙ-H (Ib)
Formel (IIIa) oder (IIIb), wobei n eine ganze Zahl größer oder gleich 2 und kleiner oder gleich 100 darstellt; und optional
- einen Schritt (b) des Isolierens und/oder Trocknens des Telomers der Formel (Ia) oder der Formel (Ib), erhalten in Schritt (a);
- einen Schritt (c) zur Herstellung einer Lösung des Makromonomers der Formel (Va):
CH₂=C(R₅)-C(=0)-NH-R₁-Z-{CH₂-C(R₂)[C(=0)N(R₃)(R₄)]-}ₙ-H (Va);
oder der Formel (Vb);
CH₂=C(R₅)-C(=0)-0-(C=0)-R₁-Z-{CH₂-C(R₂)[C(=0)N(R₃)(R₄)]-}ₙ-H (Vb);
optional
- einen Schritt (d) des Isolierens und/oder Trocknens des Makromonomers der Formel (Va) oder der Formel (Vb), erhalten in Schritt (c);
- einen Schritt (e) der Copolymerisation des Makromonomers der Formel (Va) oder der Formel (Vb) aus Schritt (c) oder Schritt (d) in das tertiäre Butanol, mit dem Ammoniumsalz der 2-Acrylamido-2-Methylpropansulfonsäure, und gegebenenfalls mit dem/den optionalen Monomer(en) und/oder dem/den vernetzenden Monomer(en), das/die mindestens zwei Kohlenstoff-Kohlenstoff-Doppelbindungen in den gewünschten molaren Anteilen umfasst/umfassen, und falls gewünscht,
- einen Schritt (f) der Reinigung des in Schritt (e) erhaltenen Kammcopolymers.
**wobei das Verfahren dadurch gekennzeichnet ist, dass** Schritt (c) darin besteht, das Telomer der Formel (Ia) oder der Formel (Ib), das in Schritt (a) oder gegebenenfalls in Schritt (b) erhalten wurde, in tertiärem Butanol mit Glycidylmethacrylat (IV) und in einem Molverhältnis (IV)/(IIIa) oder (IV)/(IIIb) kleiner als oder gleich 10 und größer als oder gleich 1 unter Beibehaltung des pH-Wertes des Reaktionsmediums bei einem Wert größer als 10 und kleiner als oder gleich 13, insbesondere größer als oder gleich 11 und kleiner als oder gleich 12 reagieren zu lassen, um nach der Einstellung des pH-Wertes auf einen Wert größer als oder gleich 7 und kleiner als oder gleich 9, vorzugsweise kleiner als oder gleich 8 zu erhalten.

2. Verfahren nach Anspruch 1, wobei die Poly(N-Alkyl(meth)acrylamid)- oder Poly(N,N-Dialkyl(meth)acrylamid)-Seitensegmente aus den folgenden Seitensegmenten ausgewählt sind:
- Poly(N-Methylmethacrylamid)-Seitensegmente,
- Poly(N-Ethylmethacrylamid)-Seitensegmente,
- Poly(N-Propylmethacrylamid)-Seitensegmente
- Poly(N-lsopropylmethacrylamid)-Seitensegmente,
- Poly[N-(2-Hydroxyethyl)-methacrylamid)]-Seitensegmente,
- Poly(N,N-Dimethylmethacrylamid)-Seitensegmente,
- Poly(N,N-Diethylmethacrylamid)-Seitensegmente,
- Poly(N-Methylacrylamid)- Seitensegmente,
- Poly(N-Ethylacrylamid)-Seitensegmente,
- Poly(N-Propylacrylamid)-Seitensegmente,
- Poly(N-Isopropylacrylamid)-Seitensegmente,
- Poly[N-(2-Hydroxyethyl)acrylamid]-Seitensegmente,
- Poly(N,N-Dimethylacrylamid)-Seitensegmente
- Poly(N,N-Diethylacrylamid)-Seitensegmente.

3. Verfahren nach Anspruch 2, wobei die Seitensegmente aus den folgenden Seitensegmenten ausgewählt sind:
- Poly(N-Isopropylacrylamid)-Seitensegmente,
- Poly[N-(2-Hydroxyethyl)acrylamid]-Seitensegmente,
- Poly(N,N-Dimethylacrylamid)-Seitensegmente und
- Poly(N,N-Diethylacrylamid)-Seitensegmente.

## Claims

1. Method for preparing a comb copolymer, of which the backbone is formed for 100% molar:
- Of 50% to 100% molar and more particularly of 75% molar to 100% molar of monomeric units from free 2-acrylamido 2-methyl propanesulphonic acid (ATBS), partially or totally salified,
- Optionally up to 50% molar in the form of ammonium salt, and more particularly up to 25% molar of monomeric units from at least one monomer chosen from acrylamide, 2-hydroxy ethyl acrylate, N,N-dimethyl acrylamide or partially or totally salified acrylic acid in the form of ammonium salt, and
- Optionally of 0.005% molar to 1%, more particularly of 0.01% molar to 0.5% molar of monomeric units from at least one crosslinking monomer comprising at least two double carbon-carbon bonds,
backbone, on which lateral poly(N-alkyl acrylamide) or poly(N,N-dialkyl acrylamide) segments are grafted, said method comprising the following successive steps:
- A step (a) of reacting a compound of formula (II):
CH₂=C(R₂)-C(=0)-N(R₃)(R₄) (II),
wherein R₂ represents a hydrogen atom or a methyl group, R₃ a hydrogen atom or a linear or branched alkyl radical comprising from 1 to 4 carbon atoms and R₄, identical or different from R₃, represents a linear or branched alkyl radical comprising from 1 to 4 carbon atoms, with a chain-limiting compound of formula (IIIa):
HS-R₁NH₂ (IIIa)
or of formula (IIIb):
HS-R₁C(=O)-OH (IIIb)
formula (IIIa) or (IIIb) wherein R₁ represents a divalent radical comprising from 1 to 4 carbon atoms, in the presence of a polymerisation initiator, in a tertio-butanol / water mixture, in order to obtain a poly(N-alkyl acrylamide) or poly(N,N-dialkyl acrylamide) telomer, of formula (Ia):
H₂N-R₁S-{CH₂C(R₂)[C(=0)N(R₃)(R₄)]-}ₙ-H (Ia)
or of formula (Ib):
HO-C(=O)-R₁S-{CH₂C(R₂)[C(=0)N(R₃)(R₄)]-}ₙ-H (Ib)
formula (IIIa) or (IIIb) wherein n represents a whole number greater than or equal to 2 and less than or equal to 100; and optionally
- A step (b) of isolating and/or of drying said telomer of formula (Ia) or of formula (lb), obtained in the step (a);
- A step (c) of preparing a solution of the macromonomer of formula (Va):
CH₂=C(R₅)-C(=0)-NH-R₁-Z-{CH₂C(R₂)[C(=0)N(R₃)(R₄)]-}ₙ-H (Va);
or of formula (Vb);
CH₂=C(R₅)-C(=0)-O-(C=O)-R₁Z-{CH₂C(R₂)[C(=0)N(R₃)(R₄)]-}ₙ-H (Vb);
optionally,
- A step (d) of isolating and/or of drying of said macromonomer of formula (Va) or of formula (Vb) obtained in the step (c);
- A step (e) of copolymerisation in the tertio-butanol, of the macromonomer of formula (Va) or of formula (Vb) from the step (c) or from the step (d), with the ammonium salt of the 2-acrylamido 2-methyl propanesulphonic acid, and where applicable with the optional monomer or monomers and/or the crosslinking monomer or monomers comprising at least two double carbon-carbon bonds in the desired molar proportions, and if desired,
- A step (f) of purifying the comb copolymer obtained in the step (e).
**said method being characterised in that** the step c) consists of reacting in the tertio-butanol the telomer of formula (Ia) or of formula (Ib) obtained in the step (a), or optionally in the step (b), with the glycidyl methacrylate (IV) and in a molar ratio (IV)/(IIIa) or (IV)/(IIIb) less than or equal to 10 and greater than or equal to 1 while still maintaining the pH of the reaction medium at a value greater than 10 and less than or equal to 13 more particularly greater than or equal to 11 and less than or equal to 12, in order to obtain, after adjusting the pH to a value greater than or equal to 7 and less than or equal to 9, preferably less than or equal to 8.

2. Method such as defined in claim 1, wherein the lateral poly(N-alkyl (meth)acrylamide) or poly(N,N-dialkyl (meth)acrylamide) segments are chosen from the following lateral segments:
- Poly(N-methyl methacrylamide) lateral segments,
- Poly(N-ethyl methacrylamide) lateral segments,
- Poly(N-propyl methacrylamide) lateral segments,
- Poly(N-isopropyl methacrylamide) lateral segments,
- Poly[N-(2-hydroxy ethyl) methacrylamide] lateral segments,
- Poly(N,N-dimethyl methacrylamide) lateral segments,
- Poly(N,N-diethyl methacrylamide) lateral segments,
- Poly(N-methyl acrylamide) lateral segments,
- Poly(N-ethyl acrylamide) lateral segments,
- Poly(N-propyl acrylamide) lateral segments,
- Poly(N-isopropyl acrylamide) lateral segments,
- Poly[N-(2-hydroxy ethyl) acrylamide] lateral segments,
- Poly(N,N-dimethyl acrylamide) lateral segments,
- Poly(N,N-diethyl acrylamide) lateral segments.

3. Method such as defined in claim 2, wherein the lateral segments are chosen from the following lateral segments:
- Poly(N-isopropyl acrylamide) lateral segments,
- Poly[N-(2-hydroxy ethyl) acrylamide] lateral segments,
- Poly(N,N-dimethyl acrylamide) lateral segments and
- Poly(N,N-diethyl acrylamide) lateral segments.
